# EUROPEAN PATENT APPLICATION

(11) **EP 4 071 623 A1**
(43) Date of publication of application: **12.10.2022**
(21) Application number: 20895000.6
(22) Date of filing: 27.08.2020
(51) Int. Cl.: G06F 13/362

(54) **MULTI-ANTENNA CHANNEL DEVICE AND CONFIGURATION METHOD**

(30) Priority: 02.12.2019 CN 201911216074
(71) Applicant: Sanechips Technology Co., Ltd., Shenzhen, Guangdong 518055 (CN)
(72) Inventor: MA, Hongxia, Shenzhen, Guangdong 518055 (CN); XU, Hongyi, Shenzhen, Guangdong 518055 (CN)
(74) Representative: Pennacchio, Salvatore Giovanni
(86) International application number: PCT/CN2020/111849
(87) International publication number: WO 2021/109638

(57) **Abstract**

A multi-antenna channel device and a configuration method for the multi-antenna channel device are provided. The multi-antenna channel device includes: a main control chip and at least two radio frequency chips, wherein the main control chip is connected to chip selection signal interfaces of the at least two radio frequency chips via a shared chip selection signal line and is configured to send a chip selection signal to a target radio frequency chip; the main control chip is connected to clock signal interfaces of the at least two radio frequency chips via a shared clock signal line and is configured to send a clock signal to the target radio frequency chip; and the main control chip is connected to data interfaces of the at least two radio frequency chips via a shared data line and is configured to send target serial data to the target radio frequency chip or receive target serial data from the target radio frequency chip according to a self-defined communication protocol format.

## Description

### Technical Field

The present invention relates to the field of wireless communication technologies, and in particular, to a multi-antenna channel device and a configuration method for a multi-antenna channel device.

### Background

With the evolution of wireless communication systems from the 4th Generation (4G) to the 5^{th} Generation (5G), a large-scale antenna array has become commonly adopted to support Multiple-Input Multiple-Output (MIMO) so as to improve the spectrum efficiency and satisfy the requirements of future services on high throughput and ultra-wideband.

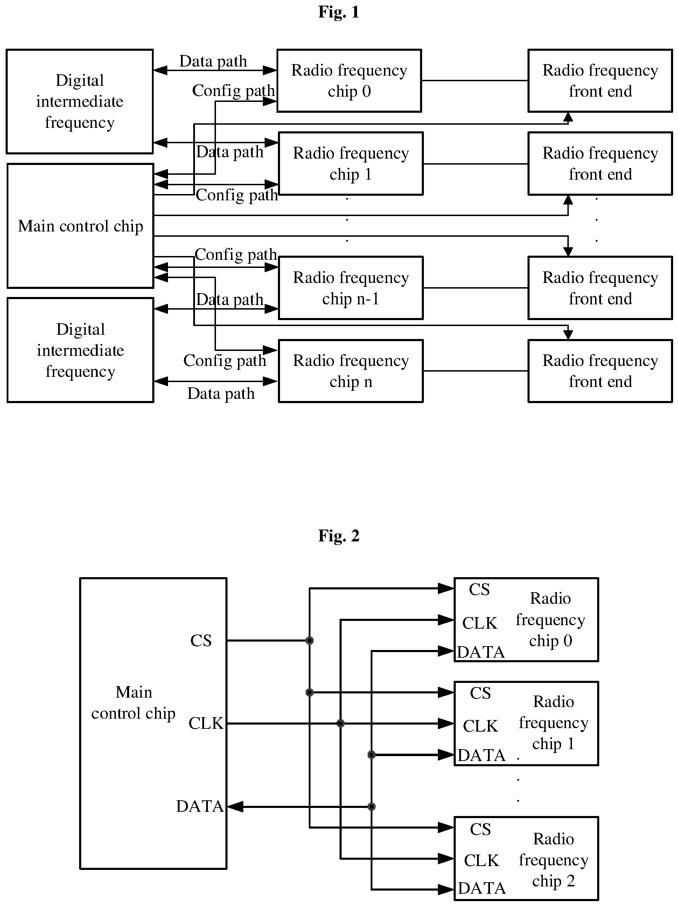

A radio base station is generally composed of a Baseband Unit (BBU) and a Remote Radio Unit (RRU). The RRU mainly provides functions such as a radio frequency transceiver including radio frequency transmitting and receiving units and a power amplifier. An RRU link system is mainly composed of a digital intermediate frequency, a Transceiver (TRC) and a radio frequency analog front end. The configuration for radio frequency elements of the system is generally distributed via a communication bus of a main control board chip, and is most commonly distributed through a Serial Peripheral Interface (SPI) with a relatively high transmission rate. When the number of transmission channels increases, the occupied hardware resources increase accordingly. As shown in Fig. 1, each radio frequency chip has an independent configuration path. However, the wiring space of a hardware system is extremely limited, and how to reduce hardware resources and improve the usage efficiency of a main control processor is a problem to be solved urgently in the configuration and implementation of an RRU link system in a 5G multi-antenna channel scenario.

### Summary

Embodiments of the present invention provide a multi-antenna channel device and a configuration method for a multi-antenna channel device, which can reduce hardware system resources of a multi-antenna channel system and improve configuration efficiency of a multi-antenna system.

According to a first aspect, the embodiments of the present invention provide a multi-antenna channel device, including a main control chip and at least two radio frequency chips, wherein the main control chip is respectively connected to chip selection signal interfaces of the at least two radio frequency chips via a shared chip selection signal line, and is configured to send a chip selection signal to a target radio frequency chip; the main control chip is respectively connected to clock signal interfaces of the at least two radio frequency chips via a shared clock signal line, and is configured to send a clock signal to the target radio frequency chip; and the main control chip is respectively connected to data interfaces of the at least two radio frequency chips via a shared data line, and is configured to send target serial data to the target radio frequency chip or receive target serial data from the target radio frequency chip according to a self-defined communication protocol format.

According to a second aspect, the embodiments of the present invention provide a configuration method for a multi-antenna channel device, which is applied to a radio frequency chip in the multi-antenna channel device according to any one of the implementations, the configuration method including:
receiving, via a shared chip selection signal line, a chip selection signal sent by a main control chip; and in a case where the chip selection signal is active, acquiring, at an active edge of a clock signal, target serial data sent by the main control chip via a shared data line, wherein the clock signal is sent by the main control chip to the radio frequency chip via a shared clock signal line, and a communication protocol format of the target serial data is self-defined.

In the technical solution provided in the embodiments, the multi-antenna channel device includes a main control chip and multiple radio frequency chips, the main control chip is respectively connected to chip selection signal interfaces of various radio frequency chips via a shared chip selection signal line, respectively connected to clock signal interfaces of various radio frequency chips via a shared clock signal line, and respectively connected to data interfaces of various radio frequency chips via a shared data line. In other words, the main control chip can implement system configuration and state monitoring on each radio frequency chip via a shared SPI-like bus. Compared with the technical solution in which a configuration path is separately set for each radio frequency chip, hardware resources required by the multi-antenna channel system are reduced. The multi-antenna channel system can be flexibly configured based on a SPI-like protocol, and a plurality of radio frequency chips can also be operated in parallel in some scenarios, thereby improving the configuration efficiency of the processor of the main control chip.

With respect to the above embodiments and other aspects of the present invention and implementations thereof, further description will be provided in the brief description of the drawings, the detailed implementations, and the claims.

### Brief Description of the Drawings

Fig. 1 is a schematic diagram of the architecture of a multi-antenna channel system in an RRU link;
Fig. 2 is a schematic diagram of the structure of a multi-antenna channel device according to some embodiments of the present invention;
Fig. 3 is a schematic diagram of a communication protocol format between a main control chip and at least one radio frequency chip according to some embodiments of the present invention;
Fig. 4 is a schematic diagram of the structure of a radio frequency chip according to some embodiments of the present invention;
Fig. 5 is a schematic flowchart of a configuration method for a multi-antenna channel device according to some embodiments of the present invention; and
Fig. 6 is a schematic flowchart of reading and writing in the communication between a main control chip and at least one radio frequency chip according to some embodiments of the present invention.

### Detailed Description

In order to make the objects, technical solutions, and advantages of the present invention more apparent, the embodiments of the present invention will be described hereinafter in detail with reference to the drawings. It should be noted that, in a case of no conflict, the embodiments in the present invention and the features in the embodiments may be combined randomly with each other.

In an exemplary implementation, Fig. 2 is a schematic diagram of the structure of a multi-antenna channel device according to some embodiments of the present invention. The device is applicable to a situation that a plurality of transmission channels exist in a multi-antenna channel system and a layout space of the hardware of the multi-antenna channel system is limited. As shown in Fig. 2, the embodiments of the present invention provide a multi-antenna channel device, including a main control chip and at least two radio frequency chips.

The main control chip is respectively connected to chip selection signal interfaces of the at least two radio frequency chips via a shared chip selection signal line, and is configured to send a chip selection signal to a target radio frequency chip.

The main control chip is respectively connected to clock signal interfaces of the at least two radio frequency chips via a shared clock signal line, and is configured to send a clock signal to the target radio frequency chip.

The main control chip is respectively connected to data interfaces of the at least two radio frequency chips via a shared data line, and is configured to send target serial data to the target radio frequency chip or receive target serial data from the target radio frequency chip according to a self-defined communication protocol format.

When the radio frequency chip is a 4T4R (4 transmission channels and 4 reception channels) radio frequency chip and it is assumed that the number of multi-antenna channels is 32, then the number of 4T4R radio frequency chips is 8. As the number of multi-antenna channels increases, the number of radio frequency chips increases.

The main control chip configures a plurality of radio frequency chips via a shared SPI-like bus, and adopts a master-slave mode architecture, in which the main control chip is a master device, and the radio frequency chips are slave devices, in this way, the system configuration and state monitoring on the radio frequency chips can be achieved in a multi-antenna channel scenario via the shared chip selection signal line, the shared clock signal line and the shared data line. A chip selection (also referred to as Chip Select, CS) signal is also generated by the main control chip, and is sent to the target radio frequency chip (that is, the radio frequency chip selected by the main control chip) via the shared chip selection signal line. Generally, the chip selection signal is active when the chip selection signal is at a low level. A clock signal (SCLK) is generated by the main control chip, and in a case where a chip selection signal is active, i.e., there is signal transmission, the clock signal is output to the target radio frequency chip in a channel-associated manner via the shared clock signal line. When the chip selection signal is low and is active, the radio frequency chip confirms that communication is started when the CS signal is at a low level, and collects data on the shared data line at an active edge of the clock signal. When implementing system configuration, the main control chip outputs data, and sends the data to the target radio frequency chip via the shared data line. When implementing data read-back, the main control chip receives the data output by the target radio frequency chip.

When the main control chip performs a reading operation on a radio frequency chip, the selected device directly outputs a signal to the shared data line, and a non-selected device presents a high-impedance state, so that sharing of an output data line can be realized, thereby reducing wiring space.

As an exemplary implementation, the data line is a bidirectional Secure Digital Input and Output (SDIO) data line.

The advantage of such configuration lies in that, when the shared data line has a bidirectional interface, the multi-antenna channel device includes three lines, i.e., a shared chip selection signal line, a shared clock signal line and a shared SDIO data line, and one line is removed compared with four signal lines in a traditional configuration for the SPI, that is, the one data line is shared for both input and output, which reduces hardware pin usage compared with the structure that input and output use independent lines.

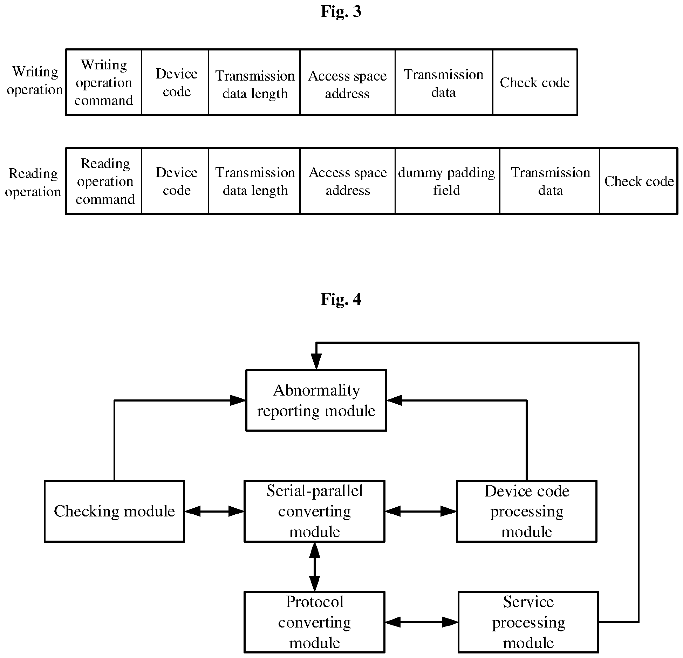

The embodiments of the present invention provide an exemplary self-defined communication protocol format. As shown in Fig. 3, in a case where the target serial data corresponds to a writing operation on the radio frequency chip, that is, when data is written into the target radio frequency chip, the target serial data sequentially represents a writing operation command, a device code, a transmission data length, an access space address, transmission data, and a check code. In a case where the target serial data corresponds to a reading operation on the radio frequency chip, that is, when data is read from the target radio frequency chip, the target serial data sequentially represents a reading operation command, a device code, a transmission data length, an access space address, a dummy padding field, transmission data, and a check code.

For a writing operation, a writing operation command, a device code, a transmission data length, an access space address, transmission data, and a check code are sequentially transmitted. For a reading operation, a reading operation command, a device code, a transmission data length, an access space address, a dummy padding field, transmission data, and a check code are sequentially transmitted. The reading/writing operation command occupies 1 bit, the bit being high represents a writing operation command, and the bit being low represents a reading operation command.

The device code is used for indicating whether to operate on a target radio frequency chip. According to a coding rule of the device code, transmission modes such as unicast, multicast and broadcast can be realized. Unicast refers to one-to-one access; multicast refers to one-to-many access; and broadcast is a special form of multicast, i.e., one-to-all access.

Taking a 32T32R scenario as an example, there are eight radio frequency chips, and it is assumed that a multicast manner is one-to-two access, then the device code may occupy a 7-bit space, which are bit[6], bit[5], bit[4], bit[3], bit[2], bit[1], and bit[0] in sequence. The coding mode of the device code is described as follows. In the example, bit[6] represents a transmission mode, wherein bit[6] = 0 represents unicast, and bit[6] = 1 represents multicast or broadcast. When bit[6] = 0, bit[2:0] represents an actual device number, and the values of bit[2:0] respectively correspond to radio frequency chip 0 - radio frequency chip 7. When bit[6] = 1 and bit[5:0] are all 1, the transmission mode is broadcast. When bit[6] = 1 and bit[5:0] are not all 1, the transmission mode is multicast, and bit[2:0] and bit[5:3] respectively correspond to two radio frequency chips of multicast. If bit[6]=1 and the values of bit[5:3] and bit[2:0] are equal, it represents that the device code is abnormal.

The transmission data length refers to an address space size that needs to be accessed during one data transmission, and supports a single operation and a burst operation. The single operation refers to a single reading/writing operation, while the burst operation refers to continuous multiple reading/writing operations, and the burst operation only aims to access a continuous address space. When loading a program into a memory of the radio frequency chip, the efficiency of the burst operation is greatly improved compared with the single operation.

The access space address is a specific address space that the main control board chip needs to access the radio frequency chip. For the burst operation, the access space address is the initial address of the continuous access, and the address is automatically accumulated inside the radio frequency chip according to the transmission data length to determine the access space address of the next reading/writing operation.

The transmission data is serial data that the main control board chip needs to write into the access space during a writing operation or read-back serial data that the radio frequency chip sends to the main control chip during a reading operation.

The check code is used for checking the transmission data, and detecting whether there is an abnormality in the transmission. For example, a Bit-Interleaved Parity 8 (8-BIP) odd checking may be adopted, an exclusive OR and reversing operation is performed on each 8 bits of received data, and a result of the exclusive OR and reversing operation is compared with the received check code. If the comparison result shows that they are consistent, it indicates that the check succeeds, and if the comparison result shows that they are inconsistent, it indicates that the check fails, and there is an abnormality in the data transmission.

The dummy padding field is applied for a reading operation, and the content of the dummy padding field can be configured. After the address is received, a configurable dummy padding field may be transmitted first. Since the dummy padding field is configurable here, the transmission of the dummy padding field can cope with the situation that different address segments of the radio frequency chip return read data with different delays.

In the technical solution provided in this embodiment, the multi-antenna channel device includes a main control chip and multiple radio frequency chips, the main control chip is respectively connected to chip selection signal interfaces of various radio frequency chips via a shared chip selection signal line, respectively connected to clock signal interfaces of various radio frequency chips via a shared clock signal line, and respectively connected to data interfaces of various radio frequency chips via a shared data line. In other words, the main control chip can implement system configuration and state monitoring on each radio frequency chip via a shared SPI-like bus. Compared with the technical solution in which a configuration path is separately set for each radio frequency chip, hardware resources required by the multi-antenna channel system are reduced. The multi-antenna channel system can be flexibly configured based on a SPI-like protocol, and a plurality of radio frequency chips can also be operated in parallel in some scenarios, thereby improving the configuration efficiency of the processor of the main control chip.

In an example, as shown in Fig. 4, the radio frequency chip includes: a device code processing module. The device code processing module is configured to: in a period of resetting of the radio frequency chip, download a target device number of the radio frequency chip via a target pin and latch the target device number; and in a period in which chip selection of the radio frequency chip is active, compare a device code determined via parsing with the target device number and generate, according to a comparison result, a flag signal indicating whether to perform a subsequent operation on the radio frequency chip, wherein a function of the target pin is restored to an original function of the target pin after the resetting is released.

The target pin is an original pin of the radio frequency chip and has a corresponding original function. In a period of resetting of the radio frequency chip, the target pin is used for downloading a target device number of the radio frequency chip, wherein the target device number is an identification for identifying the radio frequency chip. After the resetting of the radio frequency chip is released, the target pin is restored to its original function. The advantage of such an arrangement lies in that the multiplexing of the target pin during the resetting of the radio frequency chip can reduce the use of hardware resources to a certain extent.

In a period in which chip selection of the radio frequency chip is active, the device code processing module also compares the device code determined via parsing the received target serial data with the latched target device number, if the comparison result shows that they are consistent, generates a flag signal indicating to perform a subsequent operation on the radio frequency chip, i.e., indicating to perform a subsequent reading/writing operation, if the comparison result shows that they are inconsistent, generates a flag signal indicating not to perform a subsequent operation on the radio frequency chip, i.e., indicating to terminate the subsequent reading/writing operation.

Specifically, the device code processing module firstly downloads the target device number of the radio frequency chip via the target pin and latches the target device number in a period of resetting of the radio frequency chip; then which transmission mode is used is determined according to the device code obtained by the serial-parallel converting module via parsing during a period in which the chip selection of the radio frequency chip is active. If the transmission mode is broadcast, a flag signal indicating a subsequent operation is directly output. If the transmission mode is unicast or multicast, whether the device numbers are consistent needs to be judged, if the device numbers are consistent, a flag signal indicating to perform a subsequent operation is output, so that the radio frequency chip continues to complete the subsequent operation; otherwise, a flag signal indicating not to perform subsequent operation is output, so that the radio frequency chip terminates the subsequent operation.

The advantages of such an arrangement lie in that: a target pin which is not active during the resetting of the radio frequency chip is used to load a target device number, thereby effectively reducing pin usage. Meanwhile, compared with a conventional method under fixed device numbers, in which "a main control chip first reads the device number and then compares the device numbers so as to generate different chip selection signals", the operation of reading the device number by the main control chip is omitted, and the data transmission efficiency is improved.

In an example, as shown in Fig. 4, the radio frequency chip may further include a serial-parallel converting module, a protocol converting module and a service processing module.

The serial-parallel converting module is configured to implement serial-to-parallel conversion of data during a data writing operation and implement serial-to-parallel conversion or parallel-to-serial conversion of data during a data reading operation.

Data interaction between the main control chip and the radio frequency chip adopts serial transmission, and the serial-parallel converting module is configured to implement serial-to-parallel conversion and parallel-to-serial conversion of data. When the chip selection signal is pulled low, sample data is collected based on a channel associated clock (SCLK), and the serial-parallel converting module converts the sample data into parallel data according to a communication protocol format. When the main control chip acquires the data of the radio frequency chip, the serial-parallel converting module converts the parallel data of the radio frequency chip into serial data, and sends the serial data under the trigger of the channel associated clock (SCLK).

During a writing operation, the serial-parallel converting module converts serial data into parallel data including a writing operation command, a device code, a write data length, a writing operation access space address, writing operation transmission data, and a check code. During a reading operation, a reading command code, a device code, a read data length and a reading operation access space address sent by the main control chip to the radio frequency chip are converted from serial data into parallel data, and a dummy padding field, reading operation transmission data, and a check code sent by the radio frequency chip to the main control chip are converted from parallel data into serial data.

The protocol converting module is configured to convert a protocol of data obtained by the serial-parallel converting module into an interconnection bus protocol used by the service processing module.

The protocol converting module converts the information interpreted by the serial-parallel converting module into an interconnection bus protocol used by the service processing module (or referred to as a service processing system) in the radio frequency chip, so that the main control chip can access all address spaces in the radio frequency chip, thereby achieving program loading, initialization configuration, and system operation state monitoring of the system.

A reading/writing operation command, a transmission data length and an access space address are parsed according to a communication protocol format. According to a bus bridging protocol of a service processing system, such as an AHB (Advanced High-performance Bus) protocol and an APB (Advanced Peripheral Bus) protocol, a reading/writing operation command corresponding to a conversion protocol is sent after completion of address transmission, and upon receiving a ready signal returned by the service processing system, parallel writing data is sent in a case of a writing operation, and read data returned via the bus is downloaded in a case of a reading operation. For the reading operation, after the address transmission is completed, a dummy padding field of a certain length is inserted according to the communication protocol format, and then it waits for read data returned by the service processing system. The length of the dummy padding field may be configured by the main control chip. For a fixed padding period, only the longest delay of the system can be set, and when accessing a service module with a low delay, the efficiency is relatively low, and a redundant cycle may be wasted, In this case, the padding period is configurable, and the flexibility is improved. When the length of the transmitted data is greater than 1, the access space address is automatically accumulated in the protocol converting module until the length of the transmitted data reaches a specified length.

The service processing module is configured to implement interconnection between the radio frequency chip and an intermediate frequency chip, and may also complete digital and radio frequency configuration processing, radio frequency calibration algorithm and flow control, etc.

Further, as shown in Fig. 4, the radio frequency chip may further include a checking module, which is configured to check transmission data between the main control chip and the radio frequency chip.

The checking module is mainly configured to detect whether there is an abnormality in data transmission between the main control chip and the radio frequency chip. For example, an 8-BIP odd checking may be adopted, an exclusive OR and reversing operation is performed on each 8 bits of received data, and a result of the exclusive OR and reversing operation is compared with the received check code. If the comparison result shows that they are inconsistent, it indicates that the check fails. During a reading operation, a check code is generated according to read data returned by the service processing system, and is sent to the main control chip in a serial way. The checking module may also adopt other check methods, such as CRC check, which will not be repeated here.

Further, as shown in Fig. 4, the radio frequency chip may further include: an abnormality reporting module, configured to report a transmission abnormality between the main control chip and the radio frequency chip and/or an abnormality from the service processing module to the main control chip, so that the main control chip determines a corresponding measure according to an abnormality type.

The abnormality reporting module is configured to process abnormality of transmission between the main control chip and the radio frequency chip or abnormality from the service processing module, for example, a device code abnormality, a data transmission abnormality, and a service system link abnormality. The main control chip may query a real-time abnormality and a historical abnormality state, various anomalies can also be directly reported to the main control chip via a pin, and the main control board responds appropriately according to an abnormality type.

For example, if the device code module finds that the device code is abnormal, for example, the foregoing example that "bit[6]=1 and the values of bit[5:3] and bit[2:0] are equal", the device code module may send the device code abnormality to the abnormality reporting module, so that the abnormality is reported to the main control board chip by the abnormality reporting module, and the radio frequency chip discards the current abnormal operation. For another example, if the device code module finds a consistency when comparing based on the target device serial number, the transmission abnormality will be sent to the abnormality reporting module, so that the abnormality reporting module reports the abnormality to the main control board chip, and the radio frequency chip discards the current abnormal operation. For another example, when the checking module determines that the check code determined according to the received data is inconsistent with the received check code, the checking module sends the check abnormality to the abnormality reporting module, so that the abnormality reporting module reports the abnormality to the main control board chip, and the radio frequency chip discards the current abnormal operation. For another example, when reading data, the radio frequency chip inputs an output on the shared data line back into the interior of the radio frequency chip, and the abnormality reporting module is further configured to compare the output with actual output data of the radio frequency chip, and in a case where the output and the actual output data are inconsistent, report the abnormality so as to realize error operation detection.

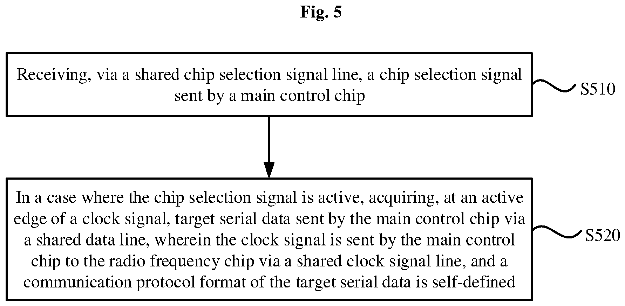

In an exemplary implementation, Fig. 5 is a schematic flowchart of a configuration method for a multi-antenna channel device according to some embodiments of the present invention. The device is applicable to a situation that a plurality of transmission channels exist in a multi-antenna channel system and a layout space of the hardware of the multi-antenna channel system is limited. The method may be performed by a radio frequency chip in a multi-antenna channel device provided in any implementation of the present invention.

As shown in Fig. 5, the configuration method for a multi-antenna channel device according to some embodiments of the present invention is applied to a radio frequency chip in the multi-antenna channel device, and includes the following operations.

At S510, a chip selection signal sent by a main control chip is received via a shared chip selection signal line.

The main control chip sends a chip selection signal to the target radio frequency chip via the shared chip selection signal line, and in general, the chip selection is active when the chip selection signal is at a low level.

At S520, in a case where the chip selection signal is active, target serial data sent by the main control chip via a shared data line is acquired at an active edge of a clock signal, wherein the clock signal is sent by the main control chip to the radio frequency chip via a shared clock signal line, and a communication protocol format of the target serial data is self-defined.

When detecting that the chip selection signal is pulled low, the target radio frequency chip confirms the start of communication with the main control chip, and at the same time, when the chip selection signal is active, a clock signal is output to the target radio frequency chip in a channel associated manner via a shared clock signal line, so that the target radio frequency chip collects serial data on the shared data line at an active edge of the clock signal.

The data line may be an SDIO data line. A self-defined communication protocol format generated by the main control chip is used to transmit data between the main control chip and the radio frequency chip. The main control chip sends out, in series, configuration data that needs to be sent to the radio frequency chip, and at the same time receives, in series, the data that needs to be read from the radio frequency chip.

As an exemplary implementation, in a case where the target serial data corresponds to a writing operation on the radio frequency chip, according to the self-defined communication protocol format, the target serial data sequentially represents a reading or writing operation command, a device code, a transmission data length, an access space address, transmission data, and a check code. In a case where the target serial data corresponds to a reading operation on the radio frequency chip, according to the self-defined communication protocol format, the target serial data sequentially represents a reading or writing operation command, a device code, a transmission data length, an access space address, a dummy padding field, transmission data, and a check code.

For a detailed explanation about the self-defined communication protocol format, reference could be made to the foregoing embodiments, and details are not repeatedly described herein.

In the technical solution provided in this embodiment, the multi-antenna channel device includes a main control chip and multiple radio frequency chips, the main control chip is respectively connected to chip selection signal interfaces of various radio frequency chips via a shared chip selection signal line, respectively connected to clock signal interfaces of various radio frequency chips via a shared clock signal line, and respectively connected to data interfaces of various radio frequency chips via a shared data line. In other words, the main control chip can implement system configuration and state monitoring on each radio frequency chip via a shared SPI-like bus. Compared with the technical solution in which a configuration path is separately set for each radio frequency chip, hardware resources required by the multi-antenna channel system are reduced. The multi-antenna channel system can be flexibly configured based on a SPI-like protocol, and a plurality of radio frequency chips can also be operated in parallel in some scenarios, thereby improving the configuration efficiency of the processor of the main control chip.

Further, after acquiring, at the active edge of the clock signal, the target serial data sent by the main control chip via the shared data line, the method may further include:
comparing a device code determined via parsing the target serial data with a target device number, and generating, according to a comparison result, a flag signal indicating whether to perform a subsequent operation on the radio frequency chip.

The target device number is a device number of the radio frequency chip downloaded by the radio frequency chip via a target pin in a period of resetting of the radio frequency chip, and a function of the target pin is restored to an original function of the target pin after the resetting is released.

The radio frequency chip downloads a target device number of the radio frequency chip via a target pin in a period of resetting of the radio frequency chip, and latches the target device number; and compares a device code determined via parsing the received target serial data with the target device number in a period in which the signal selection is active, if the comparison result shows that they are consistent, generates a flag signal indicating to perform a subsequent operation on the radio frequency chip so as to continue executing the subsequent reading/writing operation, and if the comparison result shows that they are inconsistent, generates a flag signal indicating not to execute the subsequent operation on the radio frequency chip so as to terminate subsequent reading/writing operation, and reports an abnormality to the main control chip.

Further, when comparing the device number determined via parsing the target serial data with a target device number, and generating, according to a comparison result, a flag signal indicating whether to perform a subsequent operation on the radio frequency chip, a transmission mode, e.g., , unicast, multicast or broadcast, may be determined firstly according to the device code determined via parsing the received target serial data; then, according to the determined transmission mode and according to a comparison result of the device code determined via parsing the target serial data and the target device number, a flag signal indicating whether to perform the subsequent operation on the radio frequency chip is generated.

Further, in the present embodiment, a detection mechanism is added, and in a case where the target serial data corresponds to a reading operation on the radio frequency chip, the target serial data transmitted on the shared data line is input back into the radio frequency chip, and is compared with actual output data of the radio frequency chip; in a case where the target serial data and the actual output data are inconsistent, a transmission abnormality is reported to the main control chip, so that the main control chip determines a corresponding measure.

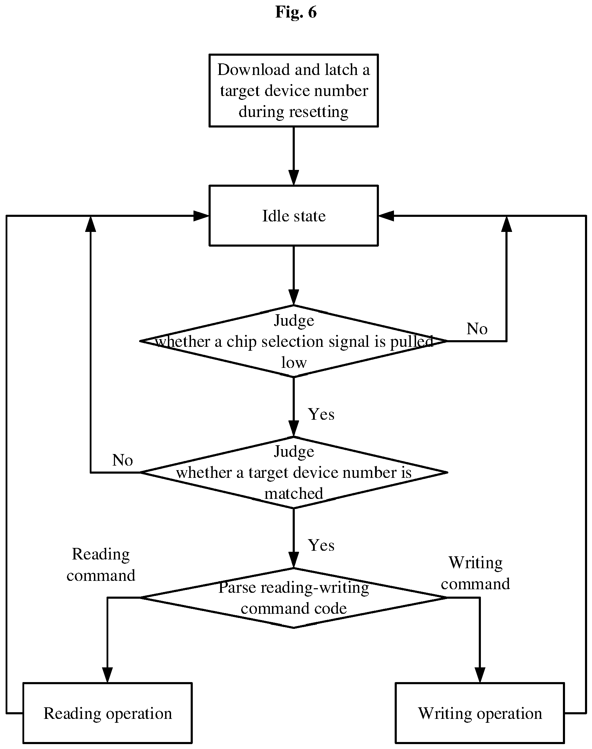

Fig. 6 shows a read/write flow of communication between a main control chip and at least one radio frequency chip. As shown in Fig. 6, the radio frequency chip downloads a target device number via a chip target pin during resetting of the radio frequency chip and latches the target device number, and after the resetting is released, the target pin restores to its original function. Since the chip selection signal line is a shared chip selection signal line, it is firstly judged whether the chip selection signal is at a low level, otherwise, an idle state is returned; and when it is detected that the chip selection signal is pulled low, it is judged whether the target device number of the target radio frequency chip matches. Specifically, a device code is parsed in the received target serial data, a transmission mode is determined (according to the described self-defined communication protocol format), and whether the target device number matches is determined according to the transmission mode and the device code determined via parsing. If the transmission mode is a broadcast mode, the radio frequency chip continues to execute the subsequent operation. If the transmission mode is multicast, then the radio frequency chip compares whether bit[2:0] or bit[5:3] matches the latched target device number, and if so, executes the subsequent operation, otherwise, returns to an idle state. If the transmission mode is unicast, the radio frequency chip compares whether the bit[2:0] matches the latched target device number, and if so, performs the subsequent operation, otherwise, the system returns to an idle state. If bit[6] = 1 and bit[2:0] and bit[5:3] are not all equal to 1 in the device code, the subsequent operation is terminated, and it is considered that the communication of the main control chip is incorrect and the abnormality is reported.

After the target device number is matched, according to first bit data collected after the chip selection signal is pulled low, a reading/writing command is judged, wherein the first bit being high represents a writing operation and the first bit being low represents a reading operation. If it is a writing operation, the writing operation is performed on the radio frequency chip according to the collected transmission data length, and transmission checking is performed. If the transmission is abnormal, the checking indicates an error, and the abnormality is reported to the main control chip. After the checking is completed, one writing operation is completed, and the chip selection signal is pulled high. If it is a reading operation, after finishing receiving the access space address, a configurable dummy padding field is sent for transmission. Here, the dummy field being configurable is able to cope with the situation that different address segments of the radio frequency chip return read data with different delays. Then, the read data and the check code returned by the radio frequency chip are sent. When the read data is sent, the direction of the SDIO data line is output. Because the data line is shared, the radio frequency chip not matching the target device number outputs a high-impedance state at this time.

The SDIO data line is a bidirectional data line, and the direction of the SDIO can be controlled by means of a reading/writing command. During a writing operation, an input of the SDIO data line is write data and a check code. During a reading operation, an output of the SDIO data line is a dummy padding field, read data, and a check code.

The reading operation also supports read-back of the radio frequency chip, but only supports read-back of one radio frequency chip. Specifically, a PAD input of the SDIO data line is connected into each radio frequency chip. When a reading operation is performed to a certain radio frequency chip, the abnormality reporting module of the radio frequency chip compares the PAD input with read data actually to be output inside the radio frequency chip; if the comparison result shows that they are inconsistent, it indicates that an error operation exists or two or more radio frequency chips are read at the same time, and in such a case, the radio frequency chip outputs an abnormality, and the abnormality reporting module performs an alarm or reports the abnormality to the main control chip.

The foregoing descriptions are merely exemplary embodiments of the present invention, but are not intended to limit the scope of protection of the present invention.

Those having ordinary skill in the art will appreciate that the term "user terminal" encompasses any suitable type of wireless user equipment, such as a mobile telephone, a portable data processing device, a portable web browser, or an in-vehicle mobile station.

In general, various embodiments of the disclosure may be implemented in hardware or special purpose circuits, software, logic, or any combination thereof. For example, some aspects may be implemented in hardware, while other aspects may be implemented in firmware or software that may be executed by a controller, a microprocessor, or other computing device, although the disclosure is not limited thereto.

Embodiments of the disclosure can be implemented by execution of computer program instructions by a data processor of a mobile device, such as in a processor entity, by hardware, or by a combination of software and hardware. The computer program instructions may be assembly instructions, instruction set architecture (ISA) instructions, machine instructions, machine-related instructions, microcode, firmware instructions, state setting data, or source or object code written in any combination of one or more programming languages.

The block diagrams of any logic flow in the figures of the present invention may represent program operations, or may represent interconnected logic circuits, modules, and functions, or may represent combinations of program operations and logic circuits, modules, and functions. The computer program may be stored on a memory. The memory may be of any type suitable to the local technical environment and may be implemented using any suitable data storage technology, such as, but not limited to, read only memory (ROM), random access memory (RAM), optical memory devices and systems (digital versatile discs, DVDs or CD discs), etc. Computer-readable media may include non-transitory storage media. The data processor may be of any type suitable to the local technical environment, such as, but not limited to, a general purpose computer, a special purpose computer, a microprocessor, a digital signal processor (DSP), an application specific integrated circuit (ASIC), a programmable logic device (FGPA), and a processor based on a multi-core processor architecture.

Detailed descriptions of exemplary embodiments of the present invention have been provided above by way of illustrative and non-limiting examples. It will be apparent to those having ordinary skill in the art that various modifications and adaptations to the above embodiments can be made without departing from the scope of the present invention. Accordingly, the proper scope of the present invention will be determined by the claims.

## Claims

1. A multi-antenna channel device, comprising: a main control chip and at least two radio frequency chips, wherein
the main control chip is respectively connected to chip selection signal interfaces of the at least two radio frequency chips via a shared chip selection signal line, and is configured to send a chip selection signal to a target radio frequency chip;
the main control chip is respectively connected to clock signal interfaces of the at least two radio frequency chips via a shared clock signal line, and is configured to send a clock signal to the target radio frequency chip; and
the main control chip is respectively connected to data interfaces of the at least two radio frequency chips via a shared data line, and is configured to send target serial data to the target radio frequency chip or receive target serial data from the target radio frequency chip according to a self-defined communication protocol format.

2. The multi-antenna channel device according to claim 1, wherein the radio frequency chip comprises:
a device code processing module, configured to: in a period of resetting of the radio frequency chip, download a target device number of the radio frequency chip via a target pin and latch the target device number; and in a period in which chip selection of the radio frequency chip is active, compare a device code determined via parsing with the target device number and generate, according to a comparison result, a flag signal indicating whether to perform a subsequent operation on the radio frequency chip,
wherein a function of the target pin is restored to an original function of the target pin after the resetting is released.

3. The multi-antenna channel device according to claim 2, wherein the radio frequency chip further comprises a serial-parallel converting module, a protocol converting module and a service processing module, wherein
the serial-parallel converting module is configured to implement serial-to-parallel conversion of data during a data writing operation, and implement serial-to-parallel conversion or parallel-to-serial conversion of data during a data reading operation;
the protocol converting module is configured to convert a protocol of data obtained by the serial-parallel converting module into an interconnection bus protocol used by the service processing module; and
the service processing module is configured to implement interconnection between the radio frequency chip and an intermediate frequency chip.

4. The multi-antenna channel device according to claim 3, wherein the radio frequency chip further comprises:
an abnormality reporting module, configured to report a transmission abnormality between the main control chip and the radio frequency chip and/or an abnormality from the service processing module to the main control chip, so that the main control chip determines a corresponding measure according to an abnormality type.

5. The multi-antenna channel device according to claim 1, wherein the data line is a bidirectional secure digital input and output signal line.

6. A configuration method for a multi-antenna channel device, which is applied to a radio frequency chip in the multi-antenna channel device according to any one of claims 1 to 5, the configuration method comprising:
receiving, via a shared chip selection signal line, a chip selection signal sent by a main control chip; and
in a case where the chip selection signal is active, acquiring, at an active edge of a clock signal, target serial data sent by the main control chip via a shared data line, wherein the clock signal is sent by the main control chip to the radio frequency chip via a shared clock signal line, and a communication protocol format of the target serial data is self-defined.

7. The configuration method according to claim 6, wherein after acquiring, at the active edge of the clock signal, the target serial data sent by the main control chip via the shared data line, the configuration method further comprises:
comparing a device code determined via parsing the target serial data with a target device number, and generating, according to a comparison result, a flag signal indicating whether to perform a subsequent operation on the radio frequency chip;
wherein the target device number is a device number of the radio frequency chip downloaded by the radio frequency chip via a target pin in a period of resetting of the radio frequency chip, and a function of the target pin is restored to an original function of the target pin after the resetting is released.

8. The configuration method according to claim 7, wherein comparing the device code determined via parsing the target serial data with the target device number, and generating, according to the comparison result, the flag signal indicating whether to perform the subsequent operation on the radio frequency chip comprises:
determining a transmission mode according to the device code determined via parsing the target serial data;
generating, according to the determined transmission mode and the comparison result obtained by comparing the device code determined via parsing the target serial data with the target device number, the flag signal indicating whether to perform the subsequent operation on the radio frequency chip.

9. The configuration method according to claim 6, wherein in a case where the target serial data corresponds to a writing operation on the radio frequency chip, according to the self-defined communication protocol format, the target serial data sequentially represents a reading or writing operation command, a device code, a transmission data length, an access space address, transmission data, and a check code;
in a case where the target serial data corresponds to a reading operation on the radio frequency chip, according to the self-defined communication protocol format, the target serial data sequentially represents a reading or writing operation command, a device code, a transmission data length, an access space address, a dummy padding field, transmission data, and a check code.

10. The configuration method according to claim 9, further comprising:
in a case where the target serial data corresponds to the reading operation on the radio frequency chip, inputting the target serial data transmitted on the shared data line back into the radio frequency chip; comparing the target serial data with actual output data of the radio frequency chip; and in a case where the target serial data and the actual output data are inconsistent, reporting a transmission abnormality to the main control chip, so that the main control chip determines a corresponding measure.
